**Europäisches Patentamt**

(19) **European Patent Office**

**Office européen des brevets**

(11) Publication number : **0 396 029 B1**

(12) # EUROPEAN PATENT SPECIFICATION

(45) Date of publication of patent specification :
**30.09.92 Bulletin 92/40**

(51) Int. Cl.<sup>5</sup> : **F16L 15/04, F16L 33/22,** **F16L 47/04, F16L 57/00**

(21) Application number : **90107989.7**

(22) Date of filing : **26.04.90**

(54) **Connector fitting.**

(30) Priority : **02.05.89 US 346473**
**12.01.90 US 464284**

(43) Date of publication of application :
**07.11.90 Bulletin 90/45**

(45) Publication of the grant of the patent :
**30.09.92 Bulletin 92/40**

(84) Designated Contracting States :
**DE ES FR GB IT**

(56) References cited :
**AT-B- 373 677**
**DE-B- 1 650 260**
**FR-A- 2 536 148**
**GB-A- 1 486 240**
**US-A- 3 734 547**
**US-A- 4 068 863**

(73) Proprietor : **McGraw, Doonan Dwight**
**245 St. James Way**
**Naples, Florida 33942-6715 (US)**

(72) Inventor : **McGraw, Doonan Dwight**
**245 St. James Way**
**Naples, Florida 33942-6715 (US)**

(74) Representative : **Liesegang, Roland, Dr.-Ing. et**
**al**
**FORRESTER & BOEHMERT**
**Franz-Joseph-Strasse 38**
**W-8000 München 40 (DE)**

## Description

The invention relates to a connector fitting according to the first clause of claim 1. Said cylindrical members may be pipes, tubes, rods, or other type members. Fittings embodying the invention may connect a cylindrical member to another body of a different type, or may connect two or more cylindrical members together. Such connections may be a coaxial arrangement, an angular arrangement, or any combination of such arrangements. When such connections are made for pipes, tubes or rods, arrangements in addition to the straight in-line or coaxial arrangement include tees, elbows, U-connections, X-connections, and the like.

A connector fitting embodying the invention comprises a nut or main body and a cap bolt for each cylindrical member to be connected by the fitting. A particular type of fitting clamping arrangement is used, which is sometimes referred to as a cantilever clamping action fitting. The type fitting employed is a quick connect and quick disconnect fitting which seals any fluid in any tube or pipe with which it is employed against pressure loss.

Numerous tube or pipe couplings or fittings are known in the art, some of them which have quick connect and quick disconnect features. US-A-4,124,235 is typical of a threaded body and nut arrangement having a wedge-like metal sleeve which is tightened in gripping relation with a tube extending therethrough as the nut is threaded on the external threads of the body. US-A-1,615,233 is typical of some cantilever clamping action fittings using tapered threads to cause the Cantilever clamps to engage the pipe or other cylindrical member being gripped. US-A-4,544,186 shows a similar clamp action fitting in which a fitting body has split ends provided with external threads. An internally threaded nut is threaded over the split ends. When the nut is threaded on the split ends until it bottoms out on a flange on the fitting body, the threads force the main body split ends into clamping engagement with a tube or pipe. US-A-3,499,671 shows another coupling for a tube without using flared ends, and includes a deformable metal sleeve between a nut and body having threaded engagement with each other.

US-A-3734547 discloses a coupling in which a fitting body has internal threads and a cap bolt with a segmented threaded stem is used to grip a pipe.

It is typical of such prior art when threads or other camming surfaces are used that the threads or camming surfaces are exposed to contaminats or physical damage during handling and transport, as well as while being used as a coupling or connector. Others are not preassembled, and then attached to cylindrical members in clamping fashion without some disassembly or with only a minimum of securing action. Some do not provide adequate sealing arrangements to handle higher fluid pressures in the tubes or pipes which are connected by them.

The problem underlying the invention is to provide an improved connector fitting of the kind specified initially, which is improved particularly with respect to the protection of the threads and with respect to its sealing properties. This problem is accomplished by claims 1 and 20.

According to the invention a nut main body has internal camming surfaces formed by threads on a bore or recess inner surface. A cap bolt has a through bore, a bolt head, and a longitudinally segmented shank defining axially extending clamping legs. External camming surfaces, defined by threads on the ends of the clamping legs which are remote from the bolt head, fit within the internal camming surfaces of the nut main body with the bolt head engaging the nut main body so that the internal and external camming surfaces are contained within the nut main body and protected against contaminants and physical damage during transport and handling. A cylindrical member, which may be a pipe, tube, rod or other device, fits through the cap bolt bore in snug but relatively movable relation, and extends at least into the nut main body recess axially beyond the internal camming surfaces. It is preferred that the nut main body have a passage or bore of which the recess having the internal camming surfaces are a part, with the cylindrical member extending at least partially into the nut main body passage or bore axially inward of the recess internal camming surfaces. The cap bolt is then further tightened, but cannot move axially further into the recess because of the engagement of the bolt head and the end of the nut main body. This causes camming action of the camming surfaces to occur, creating forces acting radially inward on the clamping legs at their ends with the external camming surfaces formed thereon, causing them to be resiliently bent in cantilever fashion to clampingly grip the cylindrical member. It is preferred that suitable seals be provided to keep the camming surfaces further protected, and to hold fluid pressures which may later be introduced into the pipe, tube or other fluid-conducting cylindrical member. It is also preferred that stop means be provided in the nut main body to locate the end of a cylindrical member at the appropriate position in the nut main body. Such stop means may be one or more shoulders positioned for abutting relation with the end of cylindrical members, or a removable C-clip in an internal groove in the passage or bore of the nut main body, or the end of another cylindrical member already positioned and clamped in place in the nut main body. The last noted stop means is particularly effective when two cylindrical members of different outer diameters are being connected by a fitting embodying the invention, with the larger one of the cylindrical member ends acting as an abutting stop for the smaller one, the larger one having been previously located by a shoulder in the nut main body passage or bore. To connect relatively soft flexible tubular members like those made of vinyl or polypropylene, a preferred development of the invention provides the features of claim 17.

In the particular arrangements claimed in claims 17 to 23, the tubular plastic member being connected will also function as a seal against contaminants as well as sealing the fitting against leakage.

Fittings embodying the invention herein disclosed and claimed may be axially extending or angularly formed, may clamp cylindrical members at two nut main body ends to join two such members together, or may have a pipe thread at one end opposite one cap bolt so that the fitting is secured to a tank or other fluid-containing device with a pipe or tube being connected to the tank interior by the fitting. Other modifications may include tees, elbows, and X-shaped nut main bodies. Different size cylindrical members may be joined by a single fitting. In all arrangements the camming surfaces are so contained as to be protected against physical damage during handling, transport, installation and use. It is also preferred that those surfaces be so protected against contaminants by the use of shipping seals until they are ready to be installed, and then by the cylindrical member or members as seals after installation and during use.

BRIEF DESCRIPTION OF THE DRAWINGS

Fig. 1 is an elevation view of a fitting showing one embodiment of the invention, with parts broken away and in section. The fitting is illustrated in its transport condition, with shipping seals or caps in place.

Fig. 2 is a cross section view of the fitting of Fig. 1, taken in the direction of arrows 2-2 of Fig. 3 and showing a pair of cylindrical members installed, with the fitting in clamping and sealing relation with the cylindrical members.

Fig. 3 is a cross section view taken in the direction of arrows 3-3 of Fig. 2.

Fig. 4 is a cross section view with parts broken away. It is similar to that of Fig. 2 and shows another embodiment of the invention wherein two cylindrical members having different outer diameters are clamped together by the fitting in sealed relation.

Fig. 5 is another cross section view with parts broken away. It is similar to that of Figs. 2 and 4 and shows still another embodiment of the invention.

Fig. 6 is another cross section view with parts broken away. It is similar to that of Figs. 2, 4 and 5 and shows an elbow version of the fitting embodying the invention.

Fig. 7 is another cross section view with parts broken away. It is similar to that of Fig. 6 and shows a tee version of the fitting embodying the invention.

Fig. 8 is another cross section view with parts broken away. It is similar to that of Fig. 2, and shows a fitting embodying the invention with one cylindrical member clamped by the fitting and the fitting main body having a pipe thread connection to a container such as a tank, the interior of which the tubular cylindrical member is connected for fluid transmission.

Fig. 9 is an elevation view of a fitting showing one embodiment of the invention, with parts broken away and in section. The fitting is shown during the first step of the installation wherein a tubular plastic member is being secured to the fitting.

Fig. 10 is also an elevation view of the fitting of Fig.9 , with parts broken away and in section. It shows a tubular plastic member installed , with the fitting in clamping and sealing relation with the tubular plastic member.

Fig. 11 is a cross section view taken of the main body, cap bolt and ferrule of the fitting of Figs. 9 and 10, in an exploded or pre-assembly arrangement.

Fig. 12 is a cross section view of the ferrule of the fitting shown in Figs. 9 to 11.

Fig. 13 is an end view of the ferrule of Fig. 12, taken in the direction of arrows 5-5 of that Fig.

Fig. 14 is another cross section view with parts broken away, showing a modification of the fitting of Figs. 9-12. The fitting is illustrated in its transport condition, with shipping seals or caps in place.

Fig. 15 is a cross section view with parts broken away, showing the fitting of Fig. 14 in its partially assembled and installed position. It is similar to that of Fig 9.

Fig. 16 is another cross section view with parts broken away. It is similar to that of Fig. 10, and shows the fitting of Fig. 14 in its fully installed position, with one tubular plastic member being connected.

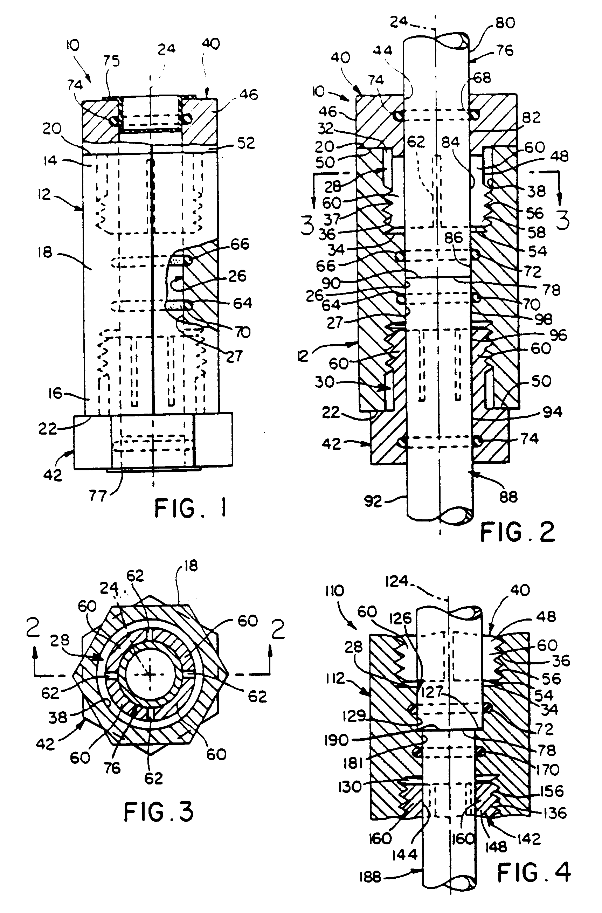

The fitting 10 of Figs. 1, 2 and 3 is of the type in which either one cylindrical member or two cylindrical members are received and clamped by the fitting. In Fig. 1, the fitting is shown in its transport condition, as will be further described. Fitting 10 has a nut 12 forming the fitting main body. The exterior of the nut is defined by opposed ends 14 and 16 and an outer side wall 18 shown as being hexagonal to provide a good tool purchase for installation and removal of the cylindrical members. Ends 14 and 16 respectively have end outer surfaces 20 and 22. These surfaces are illustrated as being perpendicular to the fitting axis 24, but are not required to be so. For example, they may be somewhat conical, in either a convex or concave manner. Such variations are more fully disclosed and claimed elsewhere, and are therefore not further shown or described here.

Bore 26 is better illustrated in Fig. 2. It has an axially central portion 27 of a diameter commensurate with the outer diameter of the cylindrical members to be received therein, preferably such that there is a snug fit but that the cylindrical members can still be moved axially and turned arcuately in the bore so long as they are not yet clamped in place. One outer end of bore 26 is provided with a recess 28 and the other bore outer end is provided with a recess 30. These recesses are larger in diameter than the diameter of the axially center portion 27 of the bore. Since these recesses are identical but oppositely disposed, only recess 28 will be described in further detail, it being understood that recess 30 is identically constructed. Recess 28 has its outer end 32 opening through nut main body end surface 20 and its inner end terminating at the recess bottom 34. Internal camming surface 36, defined by an internal thread 37, is formed on about the axially inner half of recess 28. Cross section segments of internal thread 37, as seen in Fig. 2, are generally triangular so that the camming surface 36 is a spiral surface located on the lower side of the thread 37. Camming surface 36 extends upwardly from the recess bottom 34, or from a point immediately adjacent thereto, and also extends inwardly from the side wall 38 of the recess. The camming surface 36 when seen in cross section as shown in Fig. 2, is therefore oblique to the axis 24. While the other side of the thread 37 is a similar but reverse angled surface, it functions primarily only as a thread surface for the usual threading action to be described.

The axially outer half of the recess side wall 38 is not threaded, and has a diameter at least as large as the root diameter of the thread 37 forming the internal camming surface 36 so that a mating external thread, when inserted in that part of the side wall 38, may axially pass by it without requiring any threading action. This decreases preassembly time. The internal camming surface 36 is not needed or desired in this area because the camming action should occur near the recess bottom 34 rather than near the recess outer end 32. This provides a longer moment arm for the most effective cantilever action and clamping force with a given force exerted.

Fitting 10 also has cap bolts 40 and 42 at the opposite ends 14 and 16 of nut main body 12. These cap bolts are also structurally comparable, and usually even dimensionally identical, to each other, and therefore only cap bolt 40 will be described in greater detail. It is to be understood that cap bolt 42 bears the same relationship to nut main body end surface 22 and to recess 30 as does cap bolt 40 to nut main body end surface 20 and recess 28. As later noted, it and recess 30 may at times be of a different size from cap bolt 40 and recess 28.

Cap bolt 40 has a bore 44 extending therethrough, with bore 44 being coaxial with the fitting axis 24 when assembled to and within nut main body 12. In the particular fitting illustrated, bore 44 is also preferably of the same diameter as the axially central portion 27 of bore 26. Cap bolt 40 includes a bolt head 46 and a bolt shank 48 extending axially from one of the axially spaced side surfaces 50 of bolt head 46. Bolt head 46 has a laterally positioned side exterior surface 52 also shaped for good tool purchase, and is here illustrated as being hexagonal and of the same size as the hexagonal exterior side surface 18 of the nut main body 12. As shown in Fig. 2, the bolt head surface 50 is in surface mating engagement with the nut main body end surface 20 when the cap bolt is in its installed position for fitting transport and in use.

Cap bolt shank 48 is annular since bore 44 also passes axially through it . The shank end 54 remote from bolt head 46 terminates so that it is of a somewhat shorter axial length than the axial length of recess 28 from nut main body surface 20 to recess bottom 34. External camming surface 56 is formed by an external thread 58 on shank 48 so that it extends from the shank remote end 54 axially toward bolt head surface 50, but preferably terminates at about the same distance from surface 50 that camming surface 36 terminates to the nut main body outer end 20. The remaining axial portion of shank 48 from the termination of thread 58 to the cap bolt head surface 50 is preferably of about the same diameter as the root diameter of thread 58. As described to this point, shank 48 is essentially an externally threaded annular extension from the bolt head 46. However, it is divided into several longitudinally extending segments 60 by slots 62. These slots extend from the shank outer end 54 through the camming surface 56 and also through most of the shank length, stopping immediately adjacent to, yet preferably spaced from, bolt head surface 50. Shank segments 60 may therefore be identified as cantilever shank legs. In the illustrated construction, there are four slots 62 and therefore four shank segments or legs 60. Some other applications or fitting constructions may use more or less shank legs. If less are used, the slots 62 are then considerably wider arcuately so that the shank legs are sufficiently arcuately narrow to still function as resilient cantilevers. This would lessen the maximum obtainable clamping action, and should not be used where high clamping forces are required. It is more likely that more shank legs will be preferred. When the cylindrical member to be clamped is rather large, like in drain pipes, water mains, sewer pipes, etc., there may be more slots and shank legs to maximize the effective clamping areas of the shank legs and still obtain the needed cantilever action. When used with a drain pipe that is one meter in outer diameter, for example, and therefore with an outer circumference of 3.14 meters, it would be appropriate to use as much as fifty to one hundred shank legs on one cap bolt to assure sufficient cantilever flexibility commensurate with a large total clamping area of engagement.

Since the cross section view of the cap bolt 40 in Fig. 2 is taken along a line or in a plane passing through two oppositely positioned slots 62, the two shank legs of cap bolt 40 as seen in Fig. 2 are not in section, but are shown in elevation. To more fully illustrate this, the cross section of the cap bolt 42 is shown as passing through the shank at other than the slot locations so that the shank legs of that cap bolt are shown in cross section. The cap bolt 42 is illustrated as being one-twelfth turn from having the hexagonal side surfaces of its bolt head in surface alignment with the hexagonal side surfaces of the nut main body 12 in order to show this. In the installed position, the hexagonal side surfaces in actual practice may or may not be in surface alignment unless very precise tolerances are maintained in making the nut main body, the cap bolts, and the cylindrical members. The expense to accomplish this is not normally justified.

Internal grooves 64 and 66 are preferably provided in the axial central portion 27 of bore 26, and internal groove 68 is preferably provided in bore 44 near the axially central portion of bolt head 46. Seals, here shown as O-rings 70, 72 and 74, are respectively received in grooves 64, 66, and 68 to provide added sealing relative to the cylindrical members once those members are inserted and in position to be clamped. With surfaces 20 and 50 engaged, and effectively in sealing relation even though not a high pressure seal, and seals 70, 72 and 74 sealing against the cylindrical members as well as the nut main body and cap bolt, the camming surfaces 36 and 56 are well protected against contaminants. By use of shipping caps 75 and 77 in the outer ends of the cap bolt bore 44, contaminants are kept out of the recesses and therefore away from the camming surfaces during handling and transport. These shipping caps are preferably removed only immediately prior to insertion of the cylindrical member or members to be clamped. Therefore at various times the camming surfaces are substantially always protected against contaminants by sealing means, which at times include the sealing caps 75 and 77 and, at other times, instead include the cylindrical member or memers being clamped. The sealing means may, but necessarily does not, include the seals 74, 74 in cap bolts 40 and 42, or seals 70 or 72. As noted elsewhere, these seals are not necessary when the cylindrical member or members are rods or do not conduct fluid under pressure.

The fitting 10 is normally preassembled to the extent shown in Fig. 1, with cap bolts 40 and 42 threaded in place so that their bolt heads are in light forcible surface engagement with the nut main body end surfaces. Those surface engagements, together with the shipping caps 75 and 77 in position as shown, fully protect the camming surfaces 36 and 56, and their associated threads 37 and 58, as well as the walls of the bore sections, free of contamiation by dust and dirt, etc., and against physical damage due to external forces accidentally being exerted on them.

Occasionally, a fitting 10 is to be secured to only one cylindrical member. Usually the one cylindrical member is then inserted entirely through the fitting so that it extends axially beyond both of the cap bolts 40 and 42. If it is a solid cylindrical member, or one which is not required to conduct fluid without leakage, it may terminate within the axially central portion 27 of bore 26 or therebeyond. If the fitting is to provide a tubular dead end closure of a pipe or tube cylindrical member, it should terminate after it has been inserted past one or both of seals 72 and 70, but not into recess 30. Then, a solid or dummy cap bolt is threaded in place instead of cap bolt 42, with a seal such as an O-ring seal being placed between the shank end of the solid cap bolt and the bottom of recess 30, if pressure sealing is needed. The solid cap bolt and the seal effectively plug and seal the end of the nut main body opposite cap bolt 40.

The more common use of the fitting 10 is in the connection of two pipes or tubes, as shown in Fig. 2. One tube or pipe 76 is inserted through the cap bolt bore 44 and recess 28 until its tube end 78 passes axially beyond seal 72. At this position, the tube outer surface 80 has one surface section 82 within bolt head 46 so that it is in sealing engagement with seal 74, another surface section 84 within the portion of the shank legs 60 having the camming surface 36 thereon, and another surface section 86 within the axially central bore portion 27 so that it is in sealing engagement with seal 72. The second tube or pipe 88 is inserted through the cap bolt bore of the cap bolt 42 and recess 30 until its tube end 90 passes axially beyond seal 70. If tube 76 has already been clamped in position, as would be the usual case, its tube end 78 will act as a stop engaged by the tube end 90 of tube 88, effectively axially locating that tube in position. At this position of tube 88, the tube outer surface 92 has one surface section 94 within the head of cap bolt 42 so that it is in sealing engagement with the seal 74 of that cap bolt, another surface section 96 within the portion of the shank legs of cap bolt 42 having its camming surface thereon, and another surface section 98 within the axially central bore portion 27 so that it is in sealing engagement with seal 70. Tube 88 is then also clamped in position, as will be described. All of the fitting camming surfaces and bore surfaces are then once again sealed, with the tubes 76 and 88 sealing the bores and recesses in place of the shipping caps used during transport and handling.

When tube 76 is inserted into its proper axial position as above described, and also in its desired rotational position if there is a concern in that regard, it is the usual practice to then clamp it in place without delay. This is accomplished by rotating the cap bolt 40 in a direction tending to thread it further into the nut main body 12. The hexagonal outer surfaces of the bolt head 46 and the nut main body 12 aid in this operation, providing good tool purchases for tools such as wrenches. Because the cap bolt 40 is already threaded into the nut main body 12 until surfaces 20 and 50 are in engagement, the cap bolt cannot actually moved axially further into the nut main body bore 26 by such action. Instead, the camming surface 36 of the shank legs will move arcuately relative to the camming surface 56 of recess 28, causing tensile forces to be exerted along the shank legs 60. Camming action results, with a force vector which moves the outer ends of the shank legs 60 in a resilient cantilever action inwardly, causing the inner surfaces of the shank legs in the axial area of the camming surface 36 to grip and clamp the tube outer surface section 84.

It has been found, with a typical National Course thread defining the camming surfaces, that only about one-tenth of a turn of the cap bolt 40 is usually required to obtain full clamping action which will hold one-half inch tube in place against axial removal and in proper sealing relation under pressures normally encountered. The amount of arcuate turning required will vary to some extent due to any variations in the difference in the radius of the cylindrical member and the radius of the cap bolt bore, since that difference determines the distance that each of the shank leg ends must move radially inward to clamp the cylindrical member. Other factors affecting this are the pitch of the threads forming the camming surfaces and the fit of the camming surfaces to each other before clamping action is initiated.

Pressures in various hydraulic pressure systems such as those used in air conditioning systems, fuel lines, oil lines, water lines, gas lines, sewer lines, vacuum lines, and other conduits may be readily accommodated. There are numerous applications in plant equipment and machinery and other plant or building installations. Fittings embodying the invention may be used in these applications as well as others ranging from engine cooling and exhaust systems to medical equipment, for example.

They may be made of various materials, depending on the required pressures, the possible chemical reactions between the fluids being conducted and the material of the fittings, and the material of which the cylindrical members are made so that there are no adverse reactions or galvanic action, by way of example. The environnment in which the fittings and cylindrical members are to be used must also be considered. A corrosive atmosphere or fluid being conducted, or immersion in a hostile environment such as salt water would require materials designed for such use. Fittings embodying the invention may be used to assemble rods forming parts of toys, tent supports, playground equipment or scaffolding, for example. They are particularly useful in equipment requiring repeated assembly and disassembly in normal use, such as scaffolding, since they are quickly clamped in place and are as quickly released to minimize disassembly time. Fittings used in this manner may be readily reused. That is also the case in many other applications.

When conduits for conducting high temperature fluids are to be connected, such as in some power plant conduits, seals other than rubber-like O-ring seals may be used. Seals which will withstand temperatures that the rubber-like materials will not are well known in the seal art.

The fittings are also adapted to being made of injection-molded plastic such as nylon for use with small plastic tubes, or of PVC for use with PVC piping that is now so common in household water and sewer systems. In many instances they may be machined from bar stock, using appropriate metals and alloys such as brass, aluminium, bronze, and stainless steel. In other instances the nut main body may be cast of appropriate metal and machined as needed.

Fig. 4 shows a modification of the fitting of Figs. 1-3 in which two cylindrical members of different diameters are to be connected. Where appropriate, the same reference numerals apply to the same fitting elements, with different reference numerals being used for modified or new elements.

The fitting 110 has a nut main body 112 provided with a stepped bore 126 having a bore axis 124. The upper portion of the fitting 110 as seen in Fig. 4 is the same as the upper portion of fitting 10 of Fig. 2, until it reaches the midpoint of the axially central bore portion 27 of Fig. 2. Therefore it has the same recess 28 and cap bolt 40, with the same camming surfaces 36 and 56, the same shank legs 60, etc.

The modification begins with the shoulder 127 located axially about at the midpoint between seal 72 and a seal 170. Seal 170 is comparable to seal 70 of Fig. 2, but is of smaller diameter for reasons discussed below. Thus the axially central portion of bore 126 includes an upper bore section 129 and a lower bore section 131 separated by the shoulder 127. The upper bore section 129 is illustrated as being of the same diameter as the axially central bore section 27 of Fig. 2, and therfore tube 76 or some other cylindrical member fits into the upper half of the fitting 110 in the sme manner that it does in fitting 10. In the Fig. 4 modification, however, the tube end 78 is inserted in bore 126 until it seats against shoulder 127. It is in sealing engagement with seals 72 and 74 as before, and is clamped in position by cap bolt 40, and particularly its shank legs 60, as before.

The lower bore section 131 is of smaller diameter than the upper bore section 129, to accommodate a smaller outer diameter tube (or other cylindrical member) 188. Otherwise, the lower portion of the fitting 110 is similar in construction and arrangement to the lower portion of the fitting 10. Of course, the cap bolt 142 has a smaller diameter shank 148, including shank legs 160, and the recess 130 is also of somewhat smaller diameter, as are the camming surfaces 136 and 156. Tube 188 is still snugly received in the smaller diameter cap bolt bore 144, and its tube end 190 is inserted to the point where shoulder 127 is located.

In instances where the outer diameter of tube 188 is greater than the inner diameter of tube 76, tube end 190 will seat against the tube end 78, providing a stop for tube 188 in a manner similar to the stop for tube end 78 provided by shoulder 127.

If the outer diameter of tube 188 is less than the inner diameter of tube 76, tube end 190 is inserted until the tube is axially past seal 170 at the least, and may be inserted even into the end 78 of tube 76. Care is taken to insert it at least to the desired extent, with some leeway as to the exact amount of insertion. This has the added advantage that the combined lengths of tubes 76 and 188 may be telescopically adjusted over a wider range than permitted if the tube ends abut each other as shown in Figs. 2 and 4. Of course, if more axial leeway is required, the fittings 10 and 110 can be made with greater axial spacing between the locations of seals 70 and 72 of Fig. 1 or seals 170 and 72 of Fig. 2. The tube ends do not have to be abutting for sealing purposes, since seals 70 and 72 or !70 and 72 separately seal their associated tubes rather than the abutment of the tube ends being the seal.

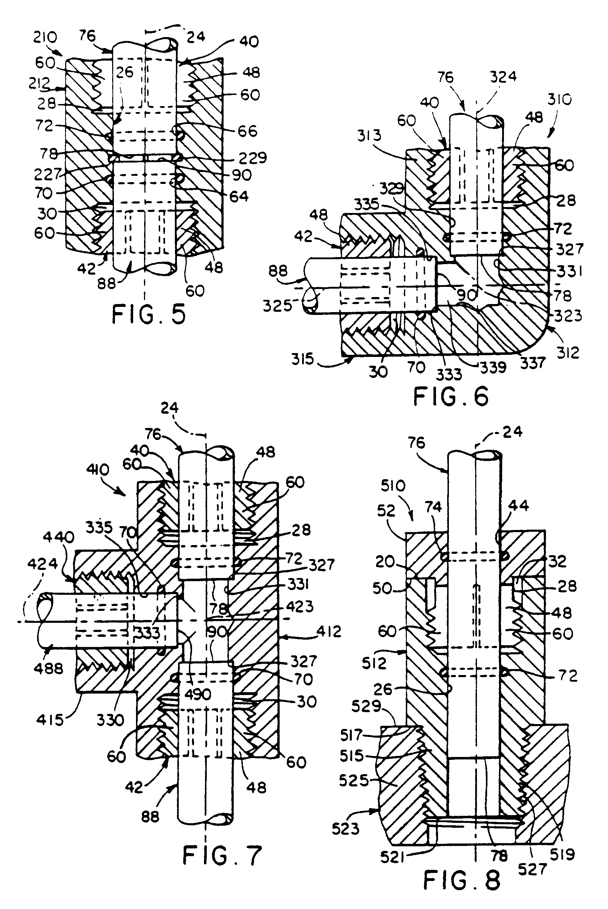

Fig. 5 shows another modification of the fitting 10 of Fig. 2. In this instance the fitting 210 uses the same bores 40 and 44, recesses 28 and 30, cap bolts 40 and 42, camming surfaces 36 and 56, tubes 76 and 88, and seals 70, 72 and 74 and their details as shown in Fig. 2. The modification includes the addition of a groove 227 in the axially central bore portion 27, the groove 227 being axially intermediate seal grooves 64 and 66 containing seals 70 and 72. A suitable removable tube stop 229 is mounted in groove 227, and is shown as being a C-clip. This clip is a resilient clip which may be of the split ring or split washer type, or a modification thereof in which the clip ends have holes therein to receive a clip compression tool for clip insertion and removal. Such clip constructions are well known in the art.

In this modification, tubes 76 and 88 are each inserted in their respective bores and bore sections until their respective tube ends 78 and 90 abut the stop 229, thus easily axially locating the tubes. The cap bolts are tightened as with the structure of Fig. 2, and the shank legs 60 clamp the tubes in place.

Fig. 6 shows another modification of fitting 10. In this modification, the nut main body 312 of fitting 310 is made in the form of an elbow rather than along a single axis. This is a good example of a nut main body which is cast and machined, or is injection molded when made of suitable plastic. Nut main body 312 has one portion 313 shown as extending upwardly in Fig. 6, and another portion 315 extending laterally. While it is shown as extending about 90° between the axis 324 of nut main body portion 313 and the axis 325 of nut main body portion 315, it is understood that it can be at other acute or obtuse angles as needed. Typical other angles would be 45° and 135°, providing fittings with oblique angles.

At times, certain ultimate user requirements may require custom angles. These can be provided, even to the extent that a U-shaped fitting can be made with a third bore having its axis intersecting the then-parallel bore section axes 324 and 325 similar to the intersection 323 of axes 324 and 325 shown in Fig. 6. This third bore would have its open end plugged if it were formed as a recess, or both open ends plugged if it is formed as a through bore. If cast, it can sometimes be cast in place without requiring such plugs. In such an arrangement, nut main body portions 313 and 315 would be spaced sufficiently far apart, at a minimum, to permit the tightening and loosening of the cap bolts 40 and 42 respectively fitted therein. Occasionally, the bores having axes 324 and 325 may even be located in different planes so that the axes are skew. The construction would be much like the U-shaped fitting, but the axes 324 and 325 would not be parallel to each other. Both axes would still intersect the axis of the third bore.

In the modification shown in Fig. 6, a shoulder 327 is formed axially between the bore sections 329 and 331, similar to shoulder 127 of Fig. 4 which is formed axially between bore sections 129 and 131. The bore section 331 is of slightly smaller diameter than bore section 329, preferably by no more than twice the wall thickness of tube 76 at tube end 78 so that the bore section 331 is no smaller than the inner diameter of tube 76 at tube end 78. By making the diameter of bore section 331 the same as the inner diameter of tube 76 at tube end 78, turbulent flow is lessened with consequent minimum pressure loss due to such flow.

Another shoulder 333 is formed axially between the bore sections 335 and 337 of bore 339, and is similar to shoulder 327. Tube 88 is illustrated as being inserted through the cap bolt 42 and recess 30 and then into bore section 335 until the tube end 90 abuts shoulder 333. The cap bolts are tightened and the tubes are clamped in position as before. Of course, one of the tubes 76 and 88 may be larger than the other, following the teaching of the arrangement of Fig. 4.

Fig. 7 shows still another modification of the fitting embodying the invention. In this arrangement the fitting 410 is formed as a tee, and is a combination of the arrangements of Figs. 2 and 6, with greater axial space between the seals 70 and 72 to accommodate the side connection constructed like the main body portion 315 of Fig. 6. The nut main body 412 therefore has bore axis 24 extending through cap bolts 40 and 42 as before, and the main body side portion 415 has its bore axis 424 intersecting bore axis 24 at 423. Main body side portion 415 is constructed in a similar manner to main body portion 315 of Fig. 6, and receives tube 488 therein in the same manner that main body portion 315 receives tube 88. Tube end 490 of tube 488 abuts shoulder 333, and the tube interiors are all in fluid communication in the bore areas where axes intersection 423 occurs. The cap bolts 40,42 and 440 are tightened to respectively clamp tubes 76, 88 and 488 in like manner as before. By prearrangement of the fitting dimensions, one or two of the tubes may have different diameters from the third tube, following the teaching in Fig. 4, rather than all being of the same outer diameter.

Fig. 8 shows another modification of the fitting 10 of Fig. 2. In this modification the upper half of the fitting 510 is the same as the upper half of fitting 10, down to the axial location beyond seal 72 from recess 28 and cap bolt 40. There is no groove 64 and seal 70 in bore 26, however, since only one tube 76 is being connected by fitting 510. The lower main body portion 515 of nut main body 512 is provided with a shoulder 517 on the outer surface thereof, and an external pipe thread 519 extends from shoulder 517 to the lower end 521 of the nut main body 512. Bore 26 extends through the lower main body portion and opens through the nut main body lower end 521.

A container 523 for a fluid to be present in tube 76 and the lower part of bore 26 has a wall 525 in which a mating internal pipe thread 527 is formed so that fitting 510 can be threaded therein and secured to the container. Although not shown, a suitable seal may be provided between shoulder 517 and the container wall outer surface 529 if needed to prevent any fluid leakage past the pipe threads. Container 523 may be a tank, a larger pipe or other conduit, a bottle, etc. In this arrangement, the fitting 510 is usually secured in place to the container by the pipe threads and the tube 76 is then inserted through the cap bolt bore 40 and the nut main body bore 26, including recess 28, until the tube end 78 is positioned axially beyond seal 72 but usually does not extend beyond nut main body end 521. If the tube 76 is a pick-up tube for fuel in a fuel tank, for example, it may extend well into the fuel tank in accordance with fuel pick-up design. The cap bolt is tightened as before, and the tube 76 is clamped in position.

In all of the fitting modifications herein disclosed, the camming surfaces and the internal bore or bores are protected with shipping caps during transport and handling, and continue to be protected by the sealing arrangements between the tube or tubes and the seals or bore walls where the tube or tubes fit snugly, as well as the surface fit between the cap bolt heads and the nut main body end surfaces. It is of particular importance and advantage that the camming surfaces are so protected at substantially all times from the time that the fitting is preassembled through the period of its installation and use in its installed condition.

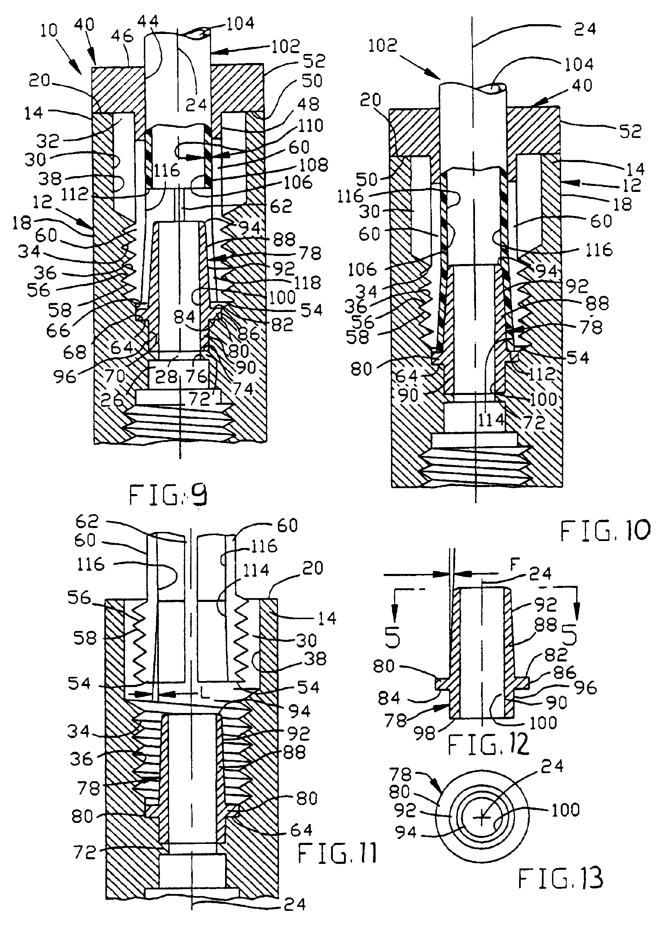

The fitting 10 of FIGURES 9,10 and 11 is of the type in which either one cylindrical member or two cylindrical members may be received and clamped by the fitting. For simplicity, no cylindrical member is shown as being connected to one end of the fitting. It is to be understood, however, that such second cylindrical member may be received and clamped by the fitting, and that such second cylindrical member may be another tubular plastic member, a tube made of metal such as copper or steel or other similar material, a pipe or a rod.

Fitting 10 has a nut forming the fitting main body 12. The exterior of the main body is defined by opposed ends, one being shown and identified as end 14. The main body outer side wall 18 may be hexagonal, to provide a good tool purchase for installation and removal of the cylindrical members. It may also have other shapes. For example, it may be circular, with oppositely disposed flat surfaces formed on a suitable part such as at the center section. The particular arrangement to provide a good tool purchase is not a part of the invention.

The end of the main body not shown because it has been broken away is usually constructed in mirror image to the end 14. End 14 has an end outer surface 20. This surface is illustrated as being perpendicular to the fitting axis 24, but are not required to be so. For example, they may be somewhat conical, in either a convex or concave manner. Such variations are being more fully disclosed and claimed elsewhere, and are therefore not further shown or described here.

Bore 26 of main body 12 can be better seen in FIGURE 11. It has an axially central portion 28 of a diameter commensurate with the inner diameter of the cylindrical members to be received, and two progressively larger diameters as will be further described. Bore 26 is provided with a recess 30 in its illustrated outer end. The bore end not shown is provided with a similar recess. These recesses are larger in diameter than the diameter of the axially center portion 28 of the bore. Since these recesses are preferably identical but oppositely disposed, only recess 30 is shown, and only it will be described in further detail.

Recess 30 has its outer end 32 opening through nut main body end surface 20 and its inner end terminating at the bore axially central portion 28. Internal camming surface 34, defined by an internal thread 36, is formed on about the axially inner half of recess 30. Cross section segments of internal thread 36, as seen in FIGURES 9-11, are generally triangular so that the camming surface 34 is a spiral surface located on the lower side of the thread 36. Camming surface 34 extends upwardly from the inner end of the recess, or from a point immediately adjacent thereto, to the recess outer end 32, and also extends inwardly from the side wall 38 of the recess. The camming surface 34, when seen in cross section as shown in FIGURE 9-11, is therefore oblique to the axis 24. While the other side of the thread 36 is a similar but reversely angled surface, it functions primarily only as a thread surface for the usual threading action to be described.

The axially outer half of the recess side wall 38 is not threaded, and has a diameter at least as large as the root diameter of the thread 36 forming the internal camming surface 34 so that a mating external thread, when inserted in that part of the side wall 38, may axially pass by it without requiring any threading action. FIGURE 11 clearly illustrates this relationship. This decreases preassembly time. The internal camming surface 34 is not needed or desired in this area because the camming action should occur near the recess inner end rather than near the recess outer end 32. This provides a longer moment arm for the most effective cantilever action and clamping force with a given force exerted.

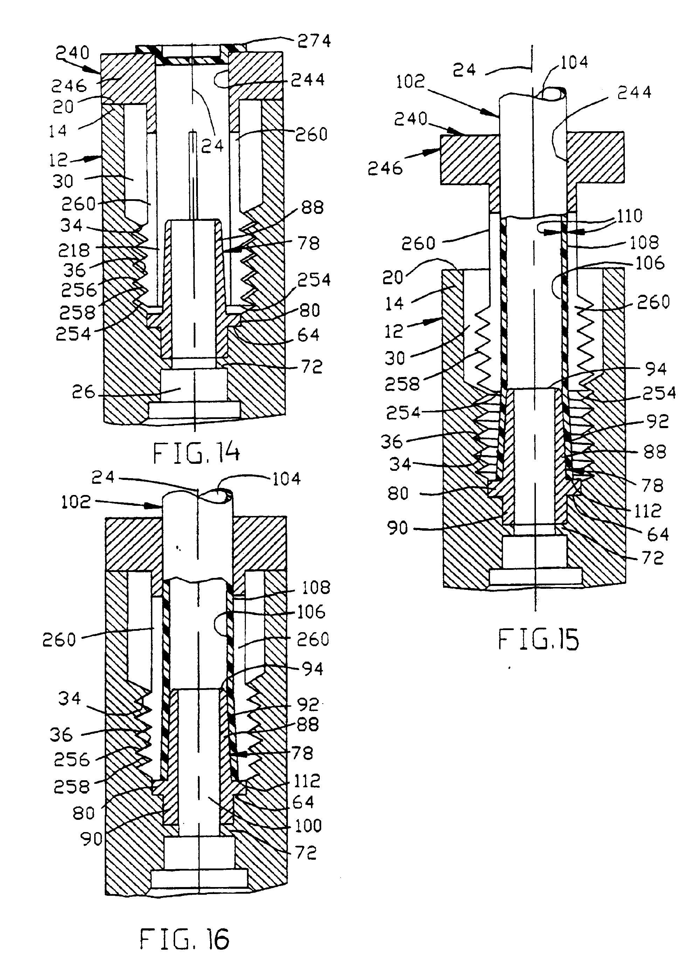

Fitting 10 also has cap bolts at the opposite ends of nut main body 12. One such cap bolt 40 is shown. These cap bolts are also structurally comparable, and usually even dimensionally identical, to each other, and therefore only cap bolt 40 is shown and described in greater detail. It is to be understood, however, that the cap bolt of FIGURES 14-16 may be used in this other main body end. Also, when the cylindrical member being secured in the other end of the main body is a hard, relatively solid and unyielding member such as a copper or stainless steel tube or pipe, the ferrule to be described with regard to FIGURES 9-13 may be eliminated. Of course, with that arrangement seals such as the O-ring seals employed in that disclosure will be used when needed. The other cap bolt so employed bears the same relationship to nut main body end surface 22 and to the recess comparable to recess 30 as does cap bolt 40 to nut main body end surface 20 and recess 30. It and its recess may at times be of a different size from cap bolt 40 and recess 30.

Cap bolt 40 has a bore 44 extending therethrough, with bore 44 being coaxial with the fitting axis 24 when assembled to and within nut main body 12. Cap bolt 40 includes a bolt head 46 and a bolt shank 48 extending axially from one of the axially spaced side surfaces 50 of bolt head 46. Bolt head 46 has a laterally positioned side exterior surface 52 also shaped for good tool purchase. It may be hexagonal and of the same size as the hexagonal exterior side surface 18 of the nut main body 12. It is not necessarily identical in shape and size as the main body exterior side surface 18, however.

As shown in FIGURES 9 and 10, the bolt head surface 50 is in surface mating engagement with the nut main body end surface 20 when the cap bolt is in its installed position for fitting transport and in use.

Cap bolt shank 48 is annular since bore 44 also passes axially through it. The shank end 54 remote from bolt head 46 terminates so that it is of a somewhat shorter axial length than the axial length of recess 28 from nut main body surface 20 to the recess inner end, effectively preventing the shank end 54 from engaging any part of the axially central portion 28 of bore 26.

External camming surface 56 is formed by an external thread 58 on shank 48 so that it extends from the shank remote end 54 axially toward bolt head surface 50, but preferably terminates at about the same distance from surface 50 that camming surface 36 terminates relative to the nut main body outer end 20. The remaining axial portion of shank 48 from the termination of thread 58 to the cap bolt head surface 50 is preferably of about the same diameter as the root diameter of thread 58. As described to this point, shank 48 is essentially an externally threaded annular extension from the bolt head 46. However, it is divided into several longitudinally extending segments or legs 60 by slots 62. These slots extend from the shank outer end 54 through the camming surface 56 and also through most of the shank length, stopping immediately adjacent to, yet preferably spaced from, bolt head surface 50. Shank segments 60 may therefore be identified as cantilever shank legs. In the illustrated construction, there are four slots 62 and therefore four shank segments or legs 60. Some other applications or fitting constructions may use more or less shank legs. If less are used, the slots 62 are then considerably wider arcuately so that the shank legs are sufficiently arcuately narrow to still function as resilient cantilevers. This would lessen the maximum obtainable clamping action, and should not be used where high clamping forces are required. It is more likely that more shank legs will be preferred. Since the cross section views of the cap bolt 40 in FIGURES 9-11 are taken along a line or in a plane passing through two oppositely positioned slots 62, the two shank legs of cap bolt 40 as seen in FIGURE 10 are not in section, but are shown in elevation.

Referring now to main body bore 26, and particularly its axially central portion 28, a shoulder 64 in formed in bore 26 at the inner end of recess 30. Bore 26 has a side surface 66 adjacent shoulder 64. Shoulder 64 is defined by an axially facing annular surface 68. Another bore side surface 70, of smaller diameter than bore side surface 66, is on the other axial side of shoulder 64 from side surface 66. A center flange 72 is formed at the center of the bore axially central portion 28. Flange 72 has an axially facing surface 74 facing axially toward recess 30. The bore 26 has a section 76 which passes through flange 72.

A ferrule 78 is provided so that the interior of the tubular plastic member has a backing surface against which clamping forces being applied through the tubular wall by the cantilever legs will secure and seal the tubular plastic member to the fitting rather than collapse it as the cap bolt it tightened. The ferrule 78 also seals the bore 26 of the main body relative to the interior passage of the ferrule through which fluid may be conducted. It acts as a guide for the installation step in which the plastic tubular member is inserted into its installed position.

Ferrule 78 is generally tubular in shape, and is preferably made of a stiff, hard material. While it may be made of a plastic such as certain nylons, it is usually made of metal having the same, or slightly greater, coefficient of expansion as the main body, assuming that the main body is made of metal. Of course, in some installations, the main body as well as the ferrule may be made of a hard plastic. The particular plastic material used will depend upon the temperatures and pressures to be encountered, the fluid being conducted through the fitting, the environment in which the fitting is used, and the characteristics of cooperating structure such as shut-off valves, solenoid controls, electronic sensors, etc.

Ferrule 78 has an exterior center flange 80 defined by oppositely disposed axially facing surfaces 82 and 84 and a side surface 86. The diameter of the flange at side surface 86 is slightly larger than the diameter of the main body bore side surface 66 adjacent shoulder 64, so that the ferrule flange 80 is press fitted into the main body with surfaces 64 and 86 being in press fit relation when the ferrule is installed. The ferrule flange axial surface 84 is in full surface engagement with the axial surface 68 of shoulder 64 when the ferrule is installed.

The ferrule 78 has one end 88 extending from side 82 of flange 80 and another end 90 extending from the other side 84 of flange 80. Ferrule end 88 has a has a tapered outer surface 92, tapered throughout its length at a convergent angle F relative to the axis 24, as shown in FIGURE 12. End 88 terminates in a rounded or more sharply tapered end surface 94. Ferrule end 90 has a lateral outer surface 96 and an axial end surface 98. It is preferred that surface 96 also be slightly larger in diameter than bore surface 70 of the main body so that these surfaces are also in press fit relation when the ferrule is installed. It is recognized that the ferrule may also be installed by the heat-shrink method in which the main body is heated relative to the ferrule until the ferrule will fit easily into the bore 26. As the main body and the ferrule reach a common temperature, the main body shrinks relative to the ferrule and the press fit is accomplished. When the ferrule is in its installed position, its axial end surface is preferably in full surface engagement with the axial surface 72 of main body flange 74.

The ferrule 78 has an axially extending bore 100 formed therethrough. When ferrule 78 is installed in the main body 12, the axis of the ferrule bore is coaxial with the axis 24 of the main body, and therefore the same reference character is used to identify the axis of the ferrule. The diameter of the ferrule bore 100 and the diameter of the axial surface 74 of main body flange 72 are preferably the same so that flow turbulence in this area is minimized. The length of ferrule end 88 is also preferably such that it terminates near the outer end of the internal thread 36 of the main body when the ferrule is in its installed position. However, this relative location may be modified as desired and needed.

The tube 102 is a plastic tube having resilient characteristics which make it difficult to clamp with sufficient holding power without some type of backup.

The ferrule 78 not only provides this backup, but also acts as a tube guide and a tube end expander during tube installation. Tube 102 has a tube passage or bore 104 defined by the tube inner wall 106. It has an outer wall 108, and the tube wall thickness 110 is the difference in the radii of the inner wall 106 and the outer wall 108. The tube has an end 112 which is inserted into the bore of cap bolt 44 at its head end as installation is begun, as shown in FIGURE 9.

In the arrangement embodying the invention as shown in FIGURES 9-11, the cap bolt 40 is also modified when compared to the cap bolt of the embodiment of FIGURES 1-3. In the arrangement embodying the invention as shown in FIGURES 14-16, the cap bolt is constructed in the same manner as the cap bolt of FIGURES 1-3.

The shank 48 and cap bolt head 46 of cap bolt 40 have straight inner wall sections 116 defining the cap bolt bore 44 from the bolt head surface 52 to a point near the beginning of the shank external thread 58. The inner wall sections are then outwardly tapered to define inner tapered surfaces 114. This taper is at an angle L. Angle L is equal to or slightly greater than angle F. For example, if angle F is 4.0°, angle L is 4.0° to about 5.0°. This arrangement is considered to be within the term of one taper angle being commensurate with the other taper angle. The axial length of inner tapered surfaces 114 is as long as or slightly longer than the axial length of the ferrule tapered surface 92, at least to the extent that when the cap bolt 40 and the ferrule 78 are in their installed positions the end surface 94 of ferrule 78 is still concentrically within the inner tapered surfaces 114. In this position, as shown in FIGURE 9, the ferrule tapered outer surface 52 and the cap bolt shank inner surfaces 114 define a slightly conical annular space 118. The radii of the two tapered surfaces 92 and 114 are such at any selected axial point the difference between them is at least equal to the tube wall thickness 110 when the cap bolt 40 and the ferrule 78 are in the installed position and before the tube 102 has been inserted.

The camming surfaces 34 and 56 are well protected against contaminants. By use of shipping caps in the outer ends of the cap bolt bore 44, contaminants are kept out of the recesses and therefore away from the camming surfaces during handling and transport. One such shipping cap is shown in FIGURE 14. These shipping caps are preferably removed only immediately prior to insertion of the cylindrical member or members to be clamped. Therefore at various times the camming surfaces are substantially always protected against contaminants by sealing means, which at times include the sealing caps and, at other times, instead include the cylindrical member or members being clamped. The sealing means may, but does not necessarily, include the O-ring seals in the cap bolts and the main body. As noted therein, these seals are not necessary when the cylindrical member or members are rods or do not conduct fluid under pressure. Also, when the cylindrical member being connected is a tubular plastic member and the claimed inventive structure is employed, the tube itself, together with a press fit of the ferrule used, provide the necessary sealing against pressure loss as well as against contaminants.

The fitting 10 is normally preassembled by first press fitting the ferrule 78 in place, and then inserting the cap bolt as shown in FIGURE 11, the cap bolt being tightened when it threadedly engages the main body to the extent shown in FIGURE 10. Cap bolt 40 is threaded in place so that its bolt head is in light forcible surface engagement with the nut main body end surface. This surface engagement, together with the similar surface engagement of the other cap bolt and the shipping caps in position in each cap bolt as shown in FIGURE 14, fully protect the damming surfaces 34 and 56, and their associated threads 36 and 58, as well as the walls of the bore sections, keeping them free of contamination by dust and dirt, etc., and protecting them against physical damage due to external forces accidentally being exerted on them.

The more common use of the fitting 10 is in the connection of two pipes or tubes, as shown in FIGURE 10 with one such tube being a plastic tube. The other pipe or tube is not shown for simplicity. The cap bolt need not be removed or loosened from its threaded engagement with the main body in order to install and secure the tube 102. The shipping cap is removed, and tube end 112 is inserted through the cap bolt bore 44 and recess 30 until it engages the ferrule rounded or highly tapered end surface 94. Surface 94 is slightly smaller in diameter than the inner diameter of the tube so that the tube end 112 fits over the ferrule end and is guided into the tapered or conical annular space 118. The tube 102 is then push so that the tube end moves over the ferrule tapered surface 92, expanding or stretching circumferentially as it does so, until the tube end 112 engages the ferrule flange axial surface 82 as shown in FIGURE 10. The cap bolt 40 is then tightened so that the thread-formed camming surfaces 34 and 56 cause the cap bolt legs 60 to move in a cantilever manner inwardly, engaging the tube outer wall 108 in gripping relation. Since the ferrule within the tube resists any radially inwardly directed forces tending to collapse the tube, the tube is tightly gripped between the cap bolt legs 60 and the ferrule. The portions of the tube which are so engaged by the cap bolt legs 60 are radially compressed, while the other parts of the tube are not so compressed. Thus the extreme outer end of the tube end 112 which, as seen in FIGURE 10 is not so engaged, will not be compressed, and will be somewhat larger in outer diameter than the inner diameter of the cap bolt bore at the leg outer ends 54. This will further resist any axial removal of the tube.

The tube fit in the cap bolt head is usually sufficiently close as to seal the recess 30 against contaminants. However if needed, a seal such as the O-ring seal may be installed in a groove of the cap bolt head for this purpose. The tapered tube-expanded fitting of the tube to the ferrule, and the additional gripping force exerted radially inwardly which adds to this surface fitting, seals the interior of the tube and the ferrule against fluid leakage. Therefore no additional seal is needed for this purpose. The press fit of the ferrule in the main body seals it against fluid leakage, and no other seal is needed. It is recognized, however, that in some instances it may be desired that the ferrule not be press fitted into the main body, but that it be more easily removed and installed. In such a case, a seal between the ferrule and the main body would be employed, preferably engaging the outer surface 96 of ferrule end 90.

Different plastic tubes may be accommodated by appropriate sized ferrules and cap bolts. For example, several tubes may have the same outer diameter, but different tube wall thicknesses. Then only the ferrule need be of a size to properly accommodate the tube inner wall 106. The diameter of the cap bolt shank bore may be of several different sizes to accommodate different tube outer wall diameters.

The modification shown in FIGURES 13-16 permits the use of the same type of cap bolt, and employs the same ferrule 78 as in FIGURES 9-13. Cap bolt 240 has a straight bore 244 throughout, instead of having the tapered inner surfaces 114 of the cap bolt legs. This results in a slightly decreasing taper of the annular space 218, as seen in FIGURE 14 . In order to accommodate the tube wall thickness, the external thread 258 on the cap bolt legs 260 are radially smaller than the internal threads 36 of the main body 12.

At the beginning of installation, the shipping cap 74 is removed, and the cap bolt 240 is threaded out of the main body as shown in FIGURE 15. The tube 102 is inserted through and beyond the cap bolt bore 244 until it extends beyond the leg ends 254 at least as far as the ferrule end 88 is long. The tube and the cap bolt are then moved axially so that the tube engages and fits over the ferrule tapered end 88 until it engages the ferrule flange. This is the partially installed situation illustrated in FIGURE 15. The cap bolt 240 is then move axially until its thread 258 can be threaded into the main body internal thread 36. The cap bolt 240 is then threaded to the position shown in FIGURE 16. As it is threaded, the taper of the ferrule having caused the outer wall of the tube to be similarly tapered, causes the cap bolt legs to move outwardly in a cantilever manner to fit this taper. This is accommodated by the difference in diameters of the internal and external threads. Once the cap bolt head 246 is seated on the end surface 20 of the main body, further tightening action of the cap bolt causes the camming surfaces formed by the threads 36 and 258 to cam the legs 260 into gripping engagement with the tube. The gripping action, compression of the tube, and sealing action are then substantially the same as more fully described with regard to FIGURES 9-11. While the assembly procedure is slightly more time consuming with this modification, it does permit simpler machining operations on the cap bolts.

Because, in the arrangement of FIGURES 9-11, the cap bolt 40 is already threaded into the nut main body 12 until surfaces 20 and 50 are in engagement, the cap bolt cannot actually moved axially further into the nut main body bore 26 by such action. Instead, the camming surface 34 of the shank legs will move arcuately relative to the camming surface 56 of recess 30, causing tensile forces to be exerted along the shank legs 60. Camming action results, with a force vector which moves the outer ends of the shank legs 60 in a resilient cantilever action inwardly, causing the inner surfaces of the shank legs in the axial area of the camming surface 36 to grip and clamp the tube outer surface wall 108.

It has been found, with a typical National Course thread defining the camming surfaces, that only about one-tenth of a turn of the cap bolt 40 is usually required to obtain full clamping action which will hold a one-half inch copper or stainless steel tube against axial removal and in proper sealing relation under pressures normally encountered. The amount of arcuate turning required will vary to some extent due to any variations in the difference in the radius of the cylindrical member and the radius of the cap bolt bore, since that difference determines the distance that each of the shank leg ends must move radially inward to clamp the cylindrical member. Other factors affecting this are the pitch of the threads forming the camming surfaces and the fit of the camming surfaces to each other before clamping action is initiated.

When working with plastic tube members, however, there is additional turning required, usually on the order of about 60°, to fully secure the tube in place because of the radial compression of the plastic tube and plastic flow as radial forces are exerted on it.

In the modification of FIGURES 14-16, the cap bolt would have to be threaded through several turns (typically five or six) before the cab bolt head engages the main body. After then it would have to be turned about an additional 60° to secure the tube in place.

Pressures in various hydraulic pressure systems such as those used in air conditioning systems, fuel lines, oil lines, water lines, gas lines, sewer lines, vacuum lines, and other conduits may be readily accommodated. There are numerous applications in plant equipment and machinery and other plant or building installations. Fittings embodying the invention may be used in these applications as well as others ranging from engine cooling and exhaust systems to medical equipment, for example.

They may be made of various materials, depending on the required pressures, the possible chemical reactions between the fluids being conducted and the material of the fittings, and the material of which the cylindrical members are made so that there are no adverse reactions, by way of example. The environment in which the fittings and cylindrical members are to be used must also be considered. A corrosive atmosphere or fluid being conducted, or immersion in a hostile environment such as salt water would require materials designed for such use. Certain plastics are particularly adapted to such uses, as well as in low pressure systems.

The fittings are also adapted to being made of injection-molded plastic such as nylon for use with small plastic tubes, or of PVC for use with PVC piping that is now so common in household water and sewer systems. When used with plastics such as PVC which are not sufficiently elastic to expand as they are installed on the ferrule, the ferrule end 88 may be straight rather than tapered, and have an outer diameter no greater than the inner diameter of the tube or pipe.

In many instances the fitting main bodies and cap bolts may be machined from bar stock, using appropriate metals and alloys such as brass, aluminum, bronze, and stainless steel. In other instances the main body may be cast of appropriate metal and machined as needed.

## Claims

1. A connector fitting of the cantilever clamp action type for connecting at least one cylindrical member (76) in which the cantilever clamping action is obtained by cooperative internal and external cam threads (36,56),
   and wherein the fitting is constructed and arranged to have said threads (36,56) protected against contaminants and accidental impact damage during normal handling, transport, attachment to at least one cylindrical member (76), and in its installed position,
   said fitting comprising:
   a nut (12) defining a fitting main body and having a recess (28) therein provided with internal threads (36) in axially inwardly spaced relation to the opening of said recess;
   a cap bolt (40) having a bore (44) therethrough, a head (46), a longitudinally segmented shank (48) extending axially from said head and provided with external
   threads (56) at the outer end thereof in axially spaced relation to said head so that said shank is fully received in said nut recess (28) when said cap bolt (40) is threaded into said nut until said head (46) engages said nut (12) at the recess opening to prevent further movement of said cap bolt head axially toward said recess and to fully contain said internal and said external threads (36,56) protectively within said recess (28); and

means sealing said cap bolt bore (44) in the area of said head and sealing said nut recess (28) axially beyond said internal threads (36),

wherein said threads (36,56) cooperate in camming relation to move the shank segments (60) in cantilever fashion radially inwardly when said cap bolt (40) is rotated in a further inwardly threading direction and to thread lockingly resist cap bolt rotation in the outwardly threading direction, said shank segments (60) then gripping the member (76) received in said bore in the axial area of said external threads (56).

2. The fitting of claim 1, **characterized** in that said sealing means comprises removable shipping caps (75,77) in said cap bolt bore (44) during normal handling and transport of the fitting.

3. The fitting of claim 1 or 2, **characterized** in that said sealing means comprises a member (76) inserted through said bore (44) and into said recess (28) at least axially beyond the axial area of said internal threads (36), said member being the member (76) being gripped by said fitting when said shank segments (60) are moved inwardly by further tightening of said cap bolt (40) and the consequent camming action of said internal and external threads (36,56).

4. The fitting of one of claims 1 to 3, **characterized** in that said camming surfaces (36,56) are internally contained so as to be protected against accidental impact damage during normal handling, transport, the process of attachment to at least one cylindrical member (76,88), and in its installed position; and said nut (12) has a bore (26,27) therein defining at one bore end the enlarged recess (28) opening outwardly of said bore through one of said nut ends, said internal thread (36) being provided in axially inwardly spaced relation to the outward opening of said recess.

5. The fitting of claim 4, **characterized** by a first seal (74) in said cap bolt bore (44) in the axial area of said bolt head (46) and a second seal (72) in said nut bore (26,27) on the axially opposite side of said recess (28) from said cap bolt (40), said first and second seals being adapted to sealingly engage a cylindrical member (76) to be inserted through said cap bolt bore (44) and said recess (28) and at least into said nut bore (26,27) axially past said second seal and to then be clamped by said clamping legs (60).

6. The fitting of claim 4 or 5, **characterized** in that said nut bore comprises a first portion (26) and an additional second portion (27) connecting with said first portion and continuing through said nut to said nut other end, said nut bore second portion having a second recess (30) and a third camming surface defined by a second internal thread positioned in axially inwardly spaced relation to the axially outward opening of said second recess, and another cap bolt (42) constructed like said first defined cap bolt (40), said another cap bolt fitting into said second recess (30) in like manner to said first defined cap bolt fitting into said first defined recess (28), said sealing means sealing said another cap bolt bore and in so doing operatively sealing said nut first and second recesses (28,30), said internal and external camming threads of said nut second recess and said another cap (42) bolt likewise cooperating in camming relation to move said another cap bolt shank segment clamping legs in cantilever fashion inwardly when said another cap bolt is rotated in a further inwardly threading direction, said another cap bolt shank segment clamping legs (60) then being adapted to clampingly grip a member (88) received in said nut bore in the axial area of said another cap bolt external thread camming surface.

7. The fitting of claim 6, **characterized** in that said nut bore has stop means (190,229) located axially intermediate said first and second recesses (28,30) for limiting the axial inward position of a member (76) to be clampingly gripped by said first named cap bolt shank segment clamping legs (60) and for operatively limiting the axially inward position of a member (88) to be clampingly gripped by said another cap bolt shank segment clamping legs (60).

8. The fitting of one of claims 6 or 7, **characterized** in that said nut bore first and second portions (26,27) are in coaxial alignment.

9. The fitting of claim 6, **characterized** in that said nut bore first and second portions are in angular axial relation so that said nut defines a fitting main body (312,412) for connecting two cylindrical members at an angle other than 180 degrees.

10. The fitting of one of claims 1 to 9, **characterized** in that said shank (48) is axially shorter than the axial extent of said nut body recess (28) between an annular end surface (20) and the body recess bottom (34) of said unit body (12).

11. The fitting of one of claims 1 to 10, **characterized** in that the internal threads (36) are provided with generally triangular cross section and extend axially from the bottom (34) of said recess (28) to no more than half the axial distance from said bottom (34) to the opening of said bore (26) through said nut body outer end surface (20).

12. The fitting of one of claims 1 to 11, **characterized** in that said fitting main body (410) has at least three of said bores and recesses and cap bolts.

13. The fitting of claim 12, **characterized** in that said fitting main body (410) has its at least three bores in intersecting relation and interconnected to define a fitting adapted to clampingly grip a number of cylindrical members (76,88,488) equal to the number of said bores, said fitting thus being one of a group of fittings comprising fittings known as tees, elbows, X-fittings and oblique fittings.

14. The fitting of one of claims 1 to 13, **characterized** in that the member is a tubular flexible plastic member (102), which when gripped extends through said cap bolt bore (44) and constitutes at least a part of said sealing means;
that a ferrule (78) having a bore (100) therethrough and pressfittedly received in said main body bore is in coaxial bore alignment with said cap bolt bore (44), said ferrule having one end (88) adapted to axially receive said tubular member (102) thereover in sealing and radial force backup relation and concentrically within said shank segment external threads (58); and
that said shank segments (60) when gripping said tubular member (102) compress said tubular member against said ferrule (78) one end in the area concentrically within said shank segment external threads (58), thereby increasing the sealing action between said tubular member and said ferrule end.

15. The fitting of claim 14, **characterized** in that said tubular flexible member (102) is a tubular plastic member and said ferrule one end (88) is tapered so that its extreme outer end is received within the end of said tubular plastic member and as the tubular plastic member is moved axially over said ferrule one end the tubular member expands concentrically to accomodate the taper of said ferrule one end (88).

16. The fitting of claim 15, **characterized** in that said cap bolt shank segments (60) have an internal tapered surface (114) commensurate with the taper of said ferrule (78) tapered one end and defining with said ferrule tapered one end a slightly conical tapered space having an annular thickness defined by the difference in the radii of said surfaces at any one location being at least as much as the thickness of the wall of said tubular annular member.

17. The fitting of claim 15, **characterized** in that said cap bolt shank segments (260) have a straight internal surface and defining with said ferrule tapered one end (88) a tapered thickness annular space when said cap bolt (240) and said ferrule (78) are installed in said main body (12) for shipping and handling.

18. The fitting of claim 17, characterized in that said cap bolt shank segment external thread has a maximum free standing diameter less than the maximum diameter of said main body internal thread so that when said cap bolt shank segments (260) are threaded into said main body (12) for shipping and handling the threads are threadedly engaged but have their respective maximum diameters spaced from each other at least to the extent that the tapered thickness annular space is of lesser thickness at any selected location than the thickness of the wall of said tubular plastic member.

19. The fitting of one of claims 14 to 18, **characterized** in that said ferrule one end and said shank segments have respective concentrically spaced inner and outer surfaces providing an annular space therebetween when said ferrule and said cap bolt are installed for shipping and handling in said main body, said annular space being at least as radially thick as the radial thickness of the wall of said tubular member.

20. A method of connecting a cylindrical tubular plastic member (102) to a connector fitting (10) having a cap bolt (40) provided with a bore (44) and axially extending shank segments (60) having an external thread camming surface (58) thereon in axially spaced relation to the head, said shank segments having a tapered internal surface (114) formed by a section of said bore radially within said external thread camming surface, a main body (12) having a recess receiving said shank segments (60) and having an internal thread camming surface (36) thereon in axially spaced relation to the opening of the recess and threadedly cooperating with said external thread camming surface, said cap bolt having a bolt head for engaging one end of said main body, the fitting having a ferrule (78) with a tapered end (88) extending within said internal thread camming surface (36) in inwardly radially spaced relation thereto so as to receive said shank segments thereabout in spaced relation, the method comprising:
(1) inserting one end of said tubular plastic member (102) in said cap bolt bore (44) and receiving said ferrule tapered end (88) therein in surface engaging relation with the tubular plastic member inner wall;

(2) moving the one end said tubular plastic member (102) axially over said ferrule tapered end, thereby circumferentially expanding the portion of said tubular plastic member to accomodate said ferrule tapered end (88) increase in diameter;

(3) and turning said cap bolt (40) to cam said shank segments (60) into gripping engagement with said tubular plastic member (102) and radially force said tubular plastic member more tightly into surface engagement with said ferrule one end (88), thereby sealing and gripping said tubular plastic member against leakage relative to said ferrule and against removal from said fitting main body (12), and to engage the bolt head against said one end of the body.

**Patentansprüche**

1. Verbinderfitting der Bauart mit Auskrag-Klemmwirkung zum Verbinden mindestens eines zylindrischen Bauteils (76), bei dem die Auskrag-Klemmwirkung durch Zusammenwirken von Innen- und Außengewinden (36, 56) erzielt wird und das Fitting so ausgebildet und angeordnet ist, daß die Gewinde (36, 56) gegen Verschmutzungen und zufällige Stoßbelastungen bei der normalen Handhabung, beim Transport, beim Anbringen an mindestens einem zylindrischen Bauteil (76) und in montierter Lage geschützt sind, wobei das Verbinderfitting umfaßt:

Eine Mutter (12), welche einen Fittinghauptkörper bildet und eine Ausnehmung (28) mit Innengewinde (36) axial einwärts von der Öffnung der Ausnehmung hat;

einen Hutbolzen (40) mit einer Durchgangsbohrung (44), einem Kopf (46) und einem längs in Segmente unterteilten Schaft (48), der sich axial vom Kopf wegerstreckt und Außengewinde (56) am äußeren Ende im axialen bestand von dem Kopf aufweist, so daß der Schaft vollständig in der Mutter-Ausnehmung (28) aufgenommen ist, wenn der Bolzen (40) in die Mutter eingeschraubt ist, bis der Kopf (46) an der Öffnung der Ausnehmung der Mutter anläuft, um weitere Bewegung des Kopfes axial in die Ausnehmung zu verhindern und Innen- und Außengewinde (36, 56) vollständig geschützt in der Ausnehmung (28) aufzunehmen; und

Dichtmittel zum Adichten der Durchgangsbohrung (44) des Hutbolzens im Bereich des Kopfes und Adichten der Mutter-Ausnehmung (28) axial jenseits des Innengewindes (36),

wobei die Gewinde (36, 56) miteinander in Eingriff so zusammenwirken, daß sie die auskragenden Schaftsegmente (60) radial einwärts drücken, wenn der Hutbolzen (40) weiter eingeschraubt wird, und eine Gewindedrehung des Hutbolzens in der Ausschraub-Richtung blockieren, wobei die Schaftsegmente (60) dann ein in dem axialen Bereich des Außengewindes (56) aufgenommenes Bauteil (76) greifen.

2. Fitting nach Anspruch 1, dadurch **gekennzeichnet**, daß die Dichtmittel entfernbare Verschiffungs-Kappen (75, 77) in der Durchgangsbohrung des Hutbolzens (44) während der normalen Handhabung und des Transports des Fittings aufweisen.

3. Fitting nach Anspruch 1 oder 2, dadurch **gekennzeichnet**, daß die Dichtmittel ein in die Durchgangsbohrung und in die Ausnehmung (28) bis mindestens axial jenseits des axialen Bereiches des Innengewindes (36) eingeführtes Bauteil (76) umfassen, wobei dieses Bauteil dem durch das Fitting gegriffenen Bauteil (76) entspricht, wenn die Schaftsegmente (60) durch weiteres Anziehen des Hutbolzens (40) und daraus folgende Eingriffswirkung der Innen- und Außengewinde (36, 56) einwärts bewegt werden.

4. Fitting nach einem der Ansprüche 1 bis 3, dadurch **gekennzeichnet**, daß die kämmenden Gewindeflächen (36, 56) innerhalb so untergebracht sind, daß sie gegen zufällige Stoßbelastung bei normalem Handhaben, beim Transport, bei der Anbringung an mindestens einem zylindrischen Bauteil (76, 88) und in montiertem Zustand geschützt sind, und daß die Mutter (12) eine Bohrung (26, 27) aufweist, welche an einem Bohrungsende die Ausnehmung (28) bildet, welche sich nach außen zu einem der Mutterenden öffnet, wobei das Innengewinde (36) axial einwärts mit bestand von der Öffnung der Ausnehmung nach außen angeordnet ist.

5. Fitting nach Anspruch 4, **gekennzeichnet** durch eine erste Dichtung (74) in der Hutbolzen-Durchgangsbohrung (44) im axialen Bereich des Bolzenkopfes (46) und eine zweite Dichtung (72) in der Mutterbohrung (26, 27) auf der axial bezüglich des Hutbolzens (40) entgegengesetzten Seite der Ausnehmung (28), wobei die erste und die zweite Dichtung abdichtend mit einem zylindrischen Bauteil (76) zusammenwirken, welches durch die Hutbolzen-Bohrung (44) und die Ausnehmung (28) mindestens bis axial jenseits der zweiten Dichtung in die Mutterbohrung (26, 27) eingeführt und dann durch die Schaftsegmente (60) eingeklemmt ist.

6.  Fitting nach Anspruch 4 oder 5, dadurch **gekennzeichnet**, daß die Mutterbohrung einen ersten beschnitt (26) und einen zusätzlich mit diesem zu dem anderen Mutterende hin verbundenen zweiten beschnitt (27) aufweist, wobei dieser zweite beschnitt eine zweite Ausnehmung (30) und eine dritte Kämmfläche aufweist, die durch ein zweites Innengewinde, welches axial einwärts von der axialen Außenöffnung der zweiten Ausnehmung erstreckt und einem weiteren Hutbolzen (42) gebildet ist, der wie der erste Hutbolzen (40) ausgebildet ist, wobei der weitere Hutbolzen in die zweite Ausnehmung (30) in gleicher Weise paßt wie der Hutbolzen in die erste Ausnehmung (28), wobei die Dichtmittel die andere Hutbolzen-Bohrung und dabei betriebsmäßig die erste und die zweite Ausnehmung (28, 30) dichten, die Innen- und Außengewinde zwischen der zweiten Mutterausnehmung und dem weiteren Hutbolzen ebenfalls kämmend miteinander zusammenwirken, um die frei auskragenden Schaftsegemente des weiteren Hutbolzens einwärts zu drücken, wenn der weitere Hutbolzen eingeschraubt wird, wodurch die Schaftsegmente (60) des weiteren Hutbolzens klemmend ein Bauteil (88) greifen, welches in die Mutterbohrung in den axialen Bereich des Außengewindes des weiteren Hutbolzens eingeführt ist.

7.  Fitting nach Anspruch 6, dadurch **gekennzeichnet**, daß die Mutterbohrung Anschlagmittel (190, 229) aufweist, die axial zwischen der ersten und der zweiten Ausnehmung (28, 30) angeordnet sind, um die axiale Einwärtsbewegung eines durch die Schaftsegmente (60) des ersten Hutbolzens zu greifenden Bauteils (76) und die axiale Einwärtsbewegung des durch die Schaftsegmente (60) des weiteren Hutbolzens zu greifenden Bauteiles (88) zu begrenzen.

8.  Fitting nach Anspruch 6 oder 7, dadurch **gekennzeichnet**, daß die ersten und zweiten Abschnitte (26, 27) der Mutterbohrung koaxial aufeinander ausgerichtet sind.

9.  Fitting nach Anspruch 6, dadurch **gekennzeichnet**, daß die ersten und zweiten Abschnitte der Mutterbohrung axial gesehen im Winkel zueinanderstehen, so daß die Mutter einen Fittinghauptkörper (312, 412) zum Verbinden zweier zylindrischer Bauteile in einer Winkelstellung anders als unter 180° bildet.

10. Fitting nach einem der Ansprüche 1 bis 9, dadurch **gekennzeichnet**, daß der Schaft (48) axial kürzer als die axiale Länge der Ausnehmung (28) zwischen einer ringförmigen Endfläche (20) und dem Grund (34) der Ausnehmung der Mutter (12) aufweist.

11. Fitting nach einem der Ansprüche 1 bis 10, dadurch **gekennzeichnet**, daß die Windungen des Innengewindes im wesentlichen einen dreieckigen Querschnitt haben und sich vom Grund (34) der Ausnehmung (28) bis zu nicht mehr als der Hälfte des axialen Abstandes zwischen dem Grund (34) und der Öffnung der Bohrung (26) in der äußeren Endfläche (20) des Mutterkörpers erstrecken.

12. Fitting nach einem der Ansprüche 1 bis 11, dadurch **gekennzeichnet**, daß der Fittinghauptkörper (410) mindestens drei Bohrungen mit Ausnehmungen und Hutbolzen enthält.

13. Fitting nach Anspruch 12, dadurch **gekennzeichnet**, daß der Fittinghauptkörper (410) mindestens drei einander schneidende und miteinander verbundene Bohrungen aufweist, um ein Fitting zu schaffen, das eine mit der Anzahl der Bohrungen übereinstimmende Anzahl von zylindrischen Bauteilen (76, 88, 488) unter Klemmung greifen kann, wobei solche Fittings zu der Gruppe gehören, die als T-, Ellbogen-, X- und Schräg-Fittings bekannt sind.

14. Fitting nach einem der Ansprüche 1 bis 13, dadurch **gekennzeichnet**, daß das Bauteil ein flexibles Kunststoffrohr (102) ist, welches sich in gegriffenem Zustand durch die Hutbolzenbohrung (44) hindurch erstreckt und mindestens einen Teil der Dichtmittel bildet; daß eine Hülse (78) mit einer Durchgangsbohrung (100) und mit Preßsitz in der Bohrung des Hauptkörpers koaxial ausgerichtet auf die Hutbolzen-Bohrung aufgenommen ist, wobei die Hülse das Rohr (102) mit einem Ende (88) axial dichtend und unter Ausübung einer radialen Stützkraft und konzentrisch zu dem Außengewinde (58) der Schaftsegmente aufnimmt, und daß die Schaftsegmente (60) beim Greifen des Rohrs (102) dieses gegen ein Ende der Hülse (78) in demjenigen Bereich andrücken, in welchem das Außengewinde (58) der Schaftsegmente damit konzentrisch ist, wodurch die Dichtwirkung zwischen dem Rohr und dem Hülsenende erhöht wird.

15. Fitting nach Anspruch 14, dadurch **gekennzeichnet**, daß das flexible Rohr (102) ein Kunststoffrohr ist und daß das eine Ende der Hülse (88) konisch ist, so daß ihr äußerestes Ende in dem entsprechenden Ende des Kunststoffrohres aufgenommen wird, und daß beim axialen Schieben des Rohres über das eine Ende der Hülse das Kunststoffrohr darauf konzentrisch gedehnt wird, um die Konizität des einen Endes der Hülse (88) aufzunehmen.

16. Fitting nach Anspruch 15, dadurch **gekennzeichnet**, daß die Schaftsegmente (60) des Hutbolzens eine innen konische Fläche (114) aufweisen, welche auf die Konizität des einen Endes der Hülse (78) abgestimmt ist und mit dem konischen Ende der Hülse einen schwach konisch ausgebildeten Raum mit einer Ringstärke bildet, welche durch die Differenz der Radien der genannten Flächen an jedem Ort mindestens so groß wie die Wandstärke des Rohrs bestimmt ist.

17. Fitting nach Anspruch 15, dadurch **gekennzeichnet**, daß die Schaftsegmente (260) des Hutbolzens eine gerade Innenfläche aufweisen und mit dem konischen Ende der Hülse (88) einen konischen Ringraum bilden, wenn der Hutbolzen (240) und die Hülse (78) im Hauptkörper (12) zum Verschiffen und Handhaben montiert sind.

18. Fitting nach Anspruch 17, dadurch **gekennzeichnet**, daß das Außengewinde der Schaftsegmente einen maximalen Außendurchmesser aufweist, der kleiner als der maximale Durchmesser des Innengewindes des Hauptkörpers ist, so daß in eingeschraubtem Zustand der Schaftsegmente (260) des Hutbolzens in den Hauptkörper (12) zum Verschiffen und Handhaben die Gewinde zwar miteinander verschraubt sind, jedoch im bestand angeordnete maximale Durchmessern zumindest in dem Ausmaß haben, daß die Konusstärke des Ringraumes an je dem ausgewählten Ort geringer als die Wandstärke des Kunststoffrohres ist.

19. Fitting nach einem der Ansprüche 14 bis 18, dadurch **gekennzeichnet**, daß das eine Ende der Hülse und die genannten Schaftsegmente koaxiale, beabstandete innere und äußere Flächen aufweisen, welche zwischen sich einen Ringraum bilden, wenn die Hülse und der Hutbolzen zum Verschiffen und Handhaben in den Hauptkörper eingebracht sind, wobei der Ringraum radial mindestens so dick wie die radiale Wandstärke des Kunststoffrohres ist.

20. Verfahren zum Verbinden eines zylindrischen Kunststoffrohres (102) mit einem Verbinderfitting (10) mit einem Hutbolzen (40), der eine Bohrung (44) und axial auskragende Schaftsegmente (60) mit Außengewinde-Kämmflächen (58) darauf aufweist, welche axial einen Abstand vom Hutbolzen-Kopf aufweisen, wobei die Schaftsegmente eine konische Innenfläche (114) aufweisen, die von einem Abschnitt der Bohrung radial innerhalb des Außengewindes gebildet ist, mit einem Hauptkörper (12) mit einer Ausnehmung, welche die Schaftsegmente (60) aufnimmt und axial im Abstand zur Öffnung der Ausnehmung eine Innengewinde-Kämmfläche (36) aufweist, welche in Schraubeingriff mit den Außengewinde-Kämmflächen zusammenwirkt, wobei der Hutbolzen einen Kopf aufweist, der mit einem Ende am Hauptkörper angreift, und das Fitting eine Hülse (78) mit einem konischen Ende (88) aufweist, welches sich innerhalb der Innengewinde-Kämmfläche (36) radial einwärts davon erstreckt, um die Schaftsegmente darauf im Abstand aufzunehmen, wobei das Verfahren umfaßt:

(1) Einsetzen eines Endes des Kunststoffrohres (102) in die Hutbolzenbohrung (44) und Aufnehmen des konischen Hülsenendes (88) darin unter Zusammenwirkung dessen Oberfläche mit der Innenwand des Kunststoffrohres;

(2) Schieben des einen Endes des Kunststoffrohres (102) axial über das konische Hülsenende, wodurch der Abschnitt des Kunststoffrohres in Umfangsrichtung gedehnt wird, um die Durchmesserzunahme des konischen Hülsenendes (88) auszugleichen; und

(3) Verdrehen des Hutbolzens (40), um die Schaftsegmente (60) in Eingriff mit dem Kunststoffrohr (102) zu bringen und das Kunststoffrohr fester in radialen Oberflächeneingriff mit dem Hülsenende (88) zu drücken, wodurch das Kunststoffrohr gegriffen und gegen Lecken bezüglich der Hülse abzudichten und gegen Entfernen aus dem Fitting-Hauptkörper zu sichern und den Bolzenkopf gegen das eine Ende des Hauptkörpers anzudrücken.

## Revendications

1. Raccord du type à action de blocage par levier pour relier au moins un élément cylindrique (76), dans lequel l'action de blocage par levier est obtenue par coopération de filetages internes et externes (36, 56) formant came, et dans lequel le raccord est constitué et agencé pour que lesdits filetages (36, 56) soient protégés contre des produits contaminants et des endommagements accidentels par impact pendant une manipulation normale, un transport, une fixation à au moins un élément cylindrique (76), et en position installée, ce raccord comprenant :

une pièce filetée (12) définissant un corps principal du raccord et comprenant un évidement (28) muni de filetages internes (36) en relation espacée axialement vers l'intérieur par rapport à l'ouverture de l'évidement ;

un boulon d'extrémité (40) comprenant un alésage traversant (44), une tête (46), et une tige segmentée longitudinalement (48) s'étendant axialement à partir de la tête et munie de filetages externes (56) à son extrémité externe en relation d'espacement axial par rapport à la tête de sorte que la tige est complètement reçue dans l'évidement (28) de la pièce filetée quand le boulon d'extrémité (40) est vissé dans la pièce filetée jusqu'à ce que la tête (46) bute contre la pièce filetée (12) au niveau de l'ouverture de l'évidement pour empêcher un déplacement ultérieur de la tête du boulon d'extrémité axialement vers l'évidement et pour contenir complètement les filetages internes et externes (36, 56) de façon protégée dans l'évidement (28) ; et

des moyens scellant l'alésage (44) du boulon d'extrémité dans la zone de la tête et scellant l'évidement de la pièce filetée (28) axialement au-delà des filetages internes (36),

dans lequel les filetages (36, 56) servent de came pour déplacer les segments (60) de la tige à la façon d'un levier radialement vers l'intérieur quand le boulon d'extrémité (40) est entraîné en rotation dans une direction de vissage supplémentaire vers l'intérieur et pour résister de façon bloquante à une rotation du boulon d'extrémité dans la direction du filetage vers l'extérieur, les segments (60) de la tigeserrant alors l'élément (76) reçu dans l'alésage dans la zone axiale des filetages externes (56).

2. Raccord selon la revendication 1, caractérisé en ce que les moyens de scellement comprennent des capuchons de protection amovibles (75, 77) dans l'alésage (44) du boulon d'extrémité pendant une manipulation normale et un transport du raccord.

3. Raccord selon la revendication 1 ou 2, caractérisé en ce que les moyens de scellement comprennent un élément (76) inséré dans l'alésage (44) et dans l'évidement (28) au moins axialement au-delà de la zone axiale des filetages internes (36), cet élément étant l'élément (76) serré par le raccord quand les segments de tige (60) sont déplacés vers l'intérieur par un serrage supplémentaire du boulon d'extrémité (40) et l'action de came ultérieure des filetages internes et externes (36, 56).

4. Raccord selon l'une des revendications 1 à 3, caractérisé en ce que les surfaces de came (36, 56) sont contenues de façon interne de façon à être protégées contre un endommagement accidentel par impact pendant une manipulation normale, un transport, le processus de fixation à au moins un élément cylindrique (76, 88) et en position installée ; et en ce que la pièce filetée (12) comprend un alésage (26, 27) définissant au niveau d'une extrémité de l'alésage l'évidement élargi (28) s'ouvrant vers l'extérieur de l'alésage par l'intermédiaire de l'une des extrémités de la pièce filetée, le filetage interne (36) étant espacé axialement vers l'intérieur par rapport à l'ouverture externe de l'évidement.

5. Raccord selon la revendication 4, caractérisé par un premier joint (74) dans l'alésage du boulon d'extrémité (44) dans la région axiale de la tête (46) du boulon et un second joint (72) dans l'alésage de la pièce filetée (26, 27) du côté axialement opposé de l'évidement (28) par rapport au boulon d'extrémité (40), les premier et second joints étant adaptés à former scellement avec un élément cylindrique (76) à insérer à travers l'alésage (44) du boulon d'extrémité et ledit évidement (28) et au moins dans l'alésage (26, 27) de la pièce filetée axialement au-delà du second joint et à être alors bloqué par les pattes de blocage (60).

6. Raccord selon la revendication 4 ou 5, caractérisé en ce que l'alésage de la pièce filetée comprend une première partie (26) et une seconde partie supplémentaire (27) rejoignant la première partie et se continuant à travers la pièce filetée vers l'autre extrémité de la pièce filetée, la seconde partie de l'alésage de la pièce filetée comprenant un second évidement (30) et une troisième surface formant came définie par un second filetage interne positionné en relation d'espacement axial vers l'intérieur par rapport à l'ouverture axiale vers l'extérieur du second évidement, et un autre boulon d'extrémité (42) constitué comme le premier boulon d'extrémité défini (40), cet autre boulon d'extrémité s'adaptant dans le second évidement (30) de façon analogue à celle selon laquelle le premier boulon d'extrémité défini s'adapte dans le premier évidement défini (28), les moyens de scellement scellant ledit autre alésage de boulon d'extrémité et scellant ainsi opérativement les premier et second évidements de la pièce filetée (28, 30), les filetages externes formant came du second évidement de la pièce filetée et l'autre boulon d'extrémité (42) servant de même de came pour déplacer les autres pattes de blocage des segments de tige de boulon d'extrémité à la façon d'un levier vers l'intérieur quand l'autre boulon d'extrémité est entraîné en rotation dans une direction de vissage supplémentaire vers l'intérieur, les autres pattes de blocage des segments de tige du boulon d'extrémité (60) étant alors adaptées à serrer et bloquer un élément (88) reçu dans l'alésage de la pièce filetée dans la zone axiale de l'autre surface de came à filetages externes du boulon d'extrémité.

7. Raccord selon la revendication 6, caractérisé en ce que l'alésage de la pièce filetée comprend des moyens de butée (190, 229) disposés axialement entre les premier et second évidements (28, 30) pour limiter la position axiale vers l'intérieur d'un élément (76) à serrer et bloquer par les premières nommées des pattes de blocage (60) des segments de tige de boulon d'extrémité et pour limiter opérativement la position axiale vers l'intérieur d'un élément (88) à serrer et bloquer par les pattés de blocage de segments de tige (60) de l'autre boulon d'extrémité.

8. Raccord selon l'une des revendications 6 ou 7, caractérisé en ce que les première et seconde parties d'alésage (26, 27) de la pièce filetée sont en alignement coaxial.

9. Raccord selon la revendication 6, caractérisé en ce que les première et seconde parties d'alésage de la pièce filetée présentent une relation axiale inclinée telle que la pièce filetée définit un corps principal du raccord (312, 412) pour relier deux éléments cylindriques selon un angle autre que 180°.

10. Raccord selon l'une des revendications 1 à 9, caractérisé en ce que la tige (48) est plus courte dans le sens axial que l'étendue axiale de l'évidement (28) du oorps de la pièce filetée entre une surface d'extrémité annulaire (20) et le fond (34) de l'évidement du corps (12) de la pièce.

11. Raccord selon l'une des revendications 1 à 10, caractérisé en ce que les filetages internes (36) ont une section de forme générale triangulaire et s'étendent axialement à partir du fond (34) de l'évidement (28) jusqu'à pas plus de la moitié de la distance axiale à partir dudit fond (34) vers l'ouverture de l'alésage (26) par l'intermédiaire de la surface d'extrémité externe (20) du corps de la pièce filetée.

12. Raccord selon l'une des revendications 1 à 11, caractérisé en ce que le corps principal du raccord (410) comprend au moins trois alésages, évidements et boulons d'extrémité.

13. Raccord selon la revendication 12, caractérisé en ce que le corps principal du raccord (410) présente ses au moins trois alésages en relation d'intersection et d'interconnexion pour définir un raccord adapté à serrer et bloquer plusieurs éléments cylindriques (76, 88, 488) en nombre égal au nombre d'alésages, le raccord étant ainsi l'un des groupes de raccords comprenant des raccords connus sous les appellations de raccords en té, en coude, en X, et obliques.

14. Raccord selon l'une des revendications 1 à 13, caractérisé en ce que

l'élément est un élément tubulaire flexible en matière plastique (102) qui, quand il est serré, s'étend à travers l'alésage du boulon d'extrémité (44) et constitue au moins une partie desdits moyens de scellement ;

un manchon (78) muni d'un alésage traversant (100) et monté à force dans l'alésage du corps principal est en alignement d'alésage coaxial avec l'alésage du boulon d'extrémité (44), ce manchon ayant une première extrémité (88) adaptée à recevoir axialement l'élément tubulaire (102) en relation de scellement et d'appui par une force radiale, et concentriquement à l'intérieur des filetages externes (58) des segments de tige ; et

les segments de tige (60), quand ils serrent l'élément tubulaire (102) compriment cet élément tubulaire contre une extrémité du manchon (78) dans la zone concentrique à l'intérieur des filetages externes (58) des segments de tige, augmentant ainsi l'action de scellement entre l'élément tubulaire et l'extrémité du manchon.

15. Raccord selon la revendication 14, caractérisé en ce que l'élément flexible tubulaire (102) est un élément tubulaire en matière plastique et la première extrémité (88) du manchon est conique de sorte que son extrémité extrême externe est reçue dans l'extrémité de l'élément tubulaire en matière plastique et, quand l'élément tubulaire en matière plastique est déplacé axialement autour du manchon, une extrémité de l'élément tubulaire se dilate concentriquement pour s'adapter à la conicité de la première extrémité (88) du manchon.

16. Raccord selon la revendication 15, caractérisé en ce que les segments de tige (60) du boulon d'extrémité ont une surface conique interne (114) de dimension adaptée à la conicité de l'extrémité conique du manchon (78), définissant avec l'extrémité conique du manchon un espace légèrement conique ayant une épaisseur annulaire définie par la différence de rayon des surfaces à un emplacement quelconque qui est au moins égale à l'épaisseur de paroi de l'élément tubulaire annulaire.

17. Raccord selon la revendication 15, caractérisé en ce que les segments de tige (260) du boulon d'extrémité ont une surface interne droite, définissant avec la première extrémité conique (88) du manchon un espace annulaire conique quand le boulon d'extrémité (240) et le manchon (78) sont installés dans le oorps principal (12) pour un transport et une manipulation.

18. Raccord selon la revendication 17, caractérisé en ce que le filetage externe des segments de tige du boulon d'extrémité présente un diamètre libre au repos maximum inférieur au diamètre maximum du filetage interne du oorps principal de sorte que, quand les segments de tige (260) du boulon d'extrémité sont vissés dans le corps principal (12) pour un transport et une manipulation, les filetages sont engagés à vissage mais ont leurs diamètres maximum respectifs espacés l'un de l'autre au moins dans la mesure où l'espace annulaire conique est d'épaisseur inférieure en tout emplacement sélectionné à l'épaisseur de la paroi de l'élément tubulaire en matière plastique.

19. Raccord selon l'une des revendications 14 à 18, caractérisé en ce que la première extrémité du manchon et les segments de tige ont des surfaces internes et externes respectives espacées de façon concentrique laissant un espace annulaire entre elles quand le manchon et le boulon d'extrémité sont installés pour un transport et une manipulation dans le oorps principal, cet espace annulaire étant au moins aussi épais radialement que l'épaisseur radiale de la paroi de l'élément tubulaire.

20. Procédé de raccordement d'un élément tubulaire cylindrique en matière plastique (102) à un raccord (10) comprenant un boulon d'extrémité (40) muni d'un alésage (44) et de segments de tige s'étendant axialement (60) ayant une surface de came à filetage externe (58) en relation espacée axialement par rapport à la tête, ces segments de tige ayant une surface interne conique (114) formée par une section de l'alésage radialement à l'intérieur de la surface de came à filetage externe, un corps principal (12) muni d'un évidement recevant les segments de tige (60) et comprenant une surface de came à filetage interne (36) en relation d'espacement axial par rapport à l'ouverture de l'évidement et coopérant par filetage avec la surface de came à filetage externe, le boulon d'extrémité comprenant une tête de boulon pour buter contre une extrémité du corps principal, le raccord comprenant un manchon (78) à extrémité conique (88) s'étendant à l'intérieur de la surface de came à filetage interne (36) en relation d'espacement radial vers l'intérieur par rapport à celle-ci de façon à recevoir autour d'elle les segments de tige en relation d'espacement, ce procédé comprenant les étapes suivantes :

1) insérer une extrémité de l'élément tubulaire en matière plastique (102) dans l'alésage (44) du boulon d'extrémité et recevoir l'extrémité conique (88) du manchon dans celui-ci en relation de butée en surface avec la paroi interne de l'élément tubulaire en matière plastique ;

2) déplacer la première extrémité de l'élément tubulaire en matière plastique (102) axialement sur l'extrémité conique du manchon, dilatant ainsi périphériquement la partie de l'élément tubulaire en matière plastique pour se conformer à l'augmentation de diamètre de l'extrémité conique (88) du manchon ; et

3) faire tourner le boulon d'extrémité (40) pour, par action de came, mettre en engagement de serrrage les segments (60) de la tige avec l'élément tubulaire en matière plastique (102) et forcer radialement l'élément tubulaire en matière plastique en contact de surface plus étroit avec l'extrémité (88) du manchon, scellant et serrant ainsi l'élément tubulaire en matière plastique à l'encontre d'une fuite par rapport au manchon et à l'encontre d'un enlèvement par rapport au corps principal du raccord (12), et engager la tête du boulon contre la première extrémité du corps.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG.14

FIG.15

FIG. 16